# EUROPEAN PATENT SPECIFICATION

(11) **EP 0 345 773 B1**
(45) Date of publication and mention of the grant of the patent: **22.02.1995**
(21) Application number: 89110378.0
(22) Date of filing: 08.06.1989
(51) Int. Cl.: G01J 3/42, G01J 3/28, G01B 11/06

(54) **Microspectroscope**
Mikroskop-Spektralgerät
Microspectroscope

(30) Priority: 08.06.1988 JP 140733/88
(43) Date of publication of application: 13.12.1989
(73) Proprietor: Dainippon Screen Mfg. Co., Ltd., Kamikyo-ku Kyoto 602 (JP)
(72) Inventor: Hayashi, Takahisa Dainippon Screen Mfg. Co., Ltd., Horikawa Dori Kamikyo-ku Kyoto (JP); Fujiwara, Nariaki c/o Dainippon Screen Mfg., Horikawa Dori Kamikyo-ku Kyoto (JP)
(74) Representative: Goddar, Heinz J., Dr.

(56) References cited:
- EP-A- 0 084 391
- EP-A- 0 197 199
- DE-U- 8 704 679
- US-A- 2 849 912
- US-A- 3 463 592
- US-A- 4 029 419
- US-A- 4 622 468
- SOVIET PHYSICS DOKLADY, vol. 28, no. 9, September 1983, pages 787-789, New York, US; G.V. PAPAYAN et al: "Microspectrophotometer for absorptiometric and reflectometric analysis of crystals"
- PATENT ABSTRACTS OF JAPAN, vol. 7, no. 290 (P-245)[1435], 24th December 1983;& JP-A-58 162 805

## Description

The present invention relates to a microspectroscope for detecting the spectrum of observed light outgoing from a sample to be measured.

Such a method of obtaining film thickness on the basis of measuring the spectrum S (λ) of an objective sample (S) is already disclosed in EP-A-0 197 199, the European version of JP-A-61 217 705. In this document, a microspectroscope including a sample holder, a light source, a beam splitter, a microscopic optical system for imaging observed light from a standard sample or the objective sample and first spectroscopic means for receiving the observed light from the microscopic optical system and separating the observed light into spectral components, as well as first detector means for detecting the spectrum of the observed light is disclosed.

There is, however, a technical drawback, that variations in the emissivity of the light source cannot be taken into account in processing the measured spectral data. The aim of the apparatus of that document is, however, to improve the light receiving means. It cannot solve the problems which develop in practical use because of the variations in the emissivity of the light source.

Further, from the document SOVIET PHYSICS DOKLADY, Vol. 28, No. 9, September 1983, pages 787 - 789, New York; G. V. Papayan and L. S. Agroskin, a microspectrophotometer for absorptiometric and reflectometric analysis of crystals is known. This microspectrometer is using a light source emitting a monochromatic beam of variable wave length and it includes an optical measurement path with a test sample and an optical reference path with a mirror. Between those two paths, switching is possible by a movable beam prism. The microspectrometer as disclosed in this document, however, is designed for studying the electronic properties of microcrystals. It fails to show an advantageous way to obtain the two spectra B' (λ) of a standard sample and S' (λ), corrected for the objective sample, in a less complex way together with proper correction.

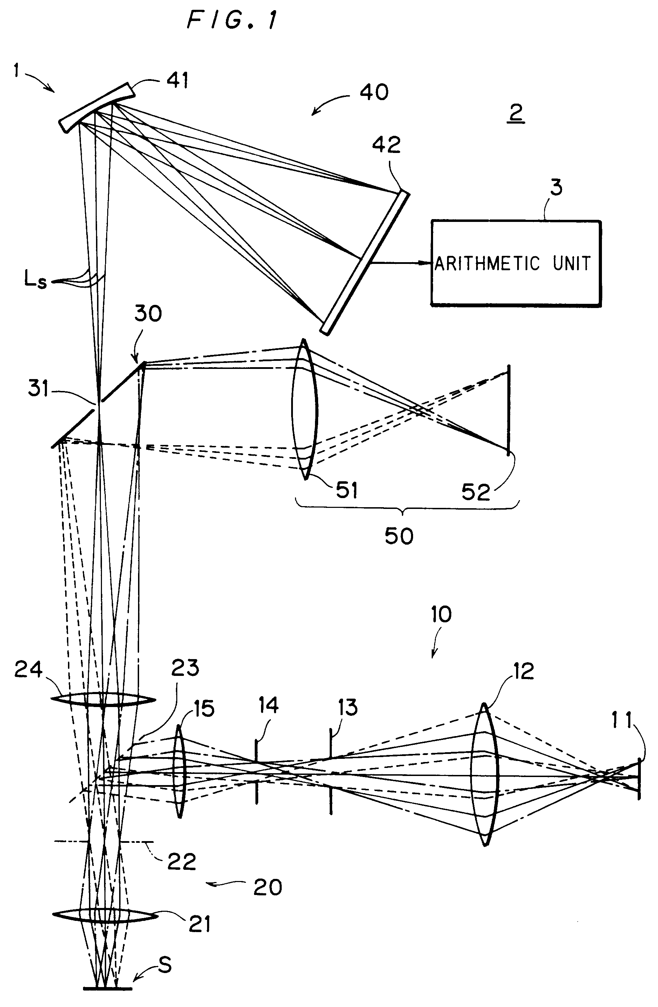

For the sake of better understanding of the invention, further prior art is shown in Fig. 1 as a schematic block diagram showing a conventional microspectroscope.

As shown in Fig. 1, the microspectroscope 1 comprises an illuminating optical system 10, a microscopic optical system 20, a reflecting mirror 30, a spectroscopic unit 40, and a monitoring optical system 50.

The illuminating optical system 10 is formed by a light source 11, a condenser lens 12, an aperture stop 13, a field stop 14 and another condenser lens 15, so that illuminating light outgoing from the light source 11 is guided to the microscopic optical system 20 through the condenser lens 12, the aperture stop 13, the field stop 14 and the condenser lens 15.

The microscopic optical system 20 is formed by an objective lens 21, an image-formation lens 24 and a beam splitter 23 provided between the objective lens 21 and the image-formation lens 24. Symbol 22 denotes a pupil position of the objective lens 21.

The illuminating light outgoing from the light source 11 passes through the condenser lens 12, the aperture stop 13, the field stop 14 and the condenser lens 15, and is guided to the objective lens 21 by the beam splitter 23. The illuminating light transmitted through the objective lens 21 is applied onto the surface of a sample S which is supported by a sample holder (not shown).

Reflected light reflected by the surface of the sample 5 is enlarged and imaged in a position close to the reflecting mirror 30 through the objective lens 21, the beam splitter 23 and the image-formation lens 24.

The reflecting mirror 30 is provided with a pinhole 31. Within the reflected light, therefore, reflected light L_{S} passing through the pinhole 31 is taken in the spectroscopic unit 40.

The spectroscopic unit 40 is formed by a diffraction grating 41 for separating the reflected light L_{S} into spectral components and a photo detector 42 for detecting the spectrum of the light spectrally diffracted by the diffraction grating 41. The diffraction grating 41 may be prepared by a flat field type diffraction grating which images a spectrum on a flat plane, for example. Alternatively, the diffraction grating may be prepared by that having a sweeper. The photo detector 42, which is formed by a photodiode array or a CCD, for example, is conjugated with the pinhole 31. Alternatively, the photo detector 42 may be prepared by a photomultiplier.

Since the spectroscopic unit 40 has the aforementioned structure, the reflected light L_{S} taken in the spectroscopic unit 40 is separated into its spectral components by the diffraction grating 41, and the respective spectral components of the light L_{S} are received by the photo detector 42, which in turn outputs a signal corresponding to the spectrum of the light L_{S}.

Within the reflected light, on the other hand, that reflected by the reflecting mirror 30 enters the monitoring optical system 50, and imaged on an image-formation position 52 through a relay lens 51. Thus, an enlarged image of the surface of the sample S is imaged on an image-formation plane, so that the measuring position of the sample S can be confirmed and focusing can be performed on the basis of the enlarged image.

When illuminating light is applied onto the surface of a sample S which comprises a substrate and a transparent thin film formed thereon, such as a silicon substrate and a silicon oxide film, for example, light reflected by the surface of the thin film and that transmitted through the thin film and then reflected by the surface of the substrate are taken in the microspectroscope while interfering with each other. The degree of such interference depends on the indexes of refraction of the substrate and the thin film, the thickness of the thin film and the wavelength of the illuminating light.

Since the indexes of refraction of the substrate and the thin film and the wavelength of the illuminating light are constant in the aforementioned microspectroscope 1, the degree of interference of the reflected light depends on only the thickness of the thin film and the microspectroscope 1 outputs a detection signal relating to the spectrum which is responsive to the thickness of the thin film. Therefore, the conventional microspectroscope 1 is generally applied to a film thickness measuring apparatus.

As shown in Fig. 1, such a film thickness measuring apparatus 2 is formed by the microspectroscope 1 and an arithmetic unit 3, so that the microspectroscope 1 detects the spectrum of the sample S and the arithmetic unit 3 operates the film thickness of the sample S on the basis of spectral data obtained by the microspectroscope 1.

The spectrum detected by the microspectroscope 1 is influenced by various factors such as spectral transmittance characteristics of the illuminating optical system 10 and the microscopic optical system 20, luminous energy loss caused when the light passes through these optical systems, the spectral characteristic of the diffraction grating 41, the spectral-response characteristic of the photo detector 42, and the like. In order to accurately measure the film thickness of the sample S, it is necessary to eliminate such influences.

Thus, errors caused by such factors are calibrated as follows:

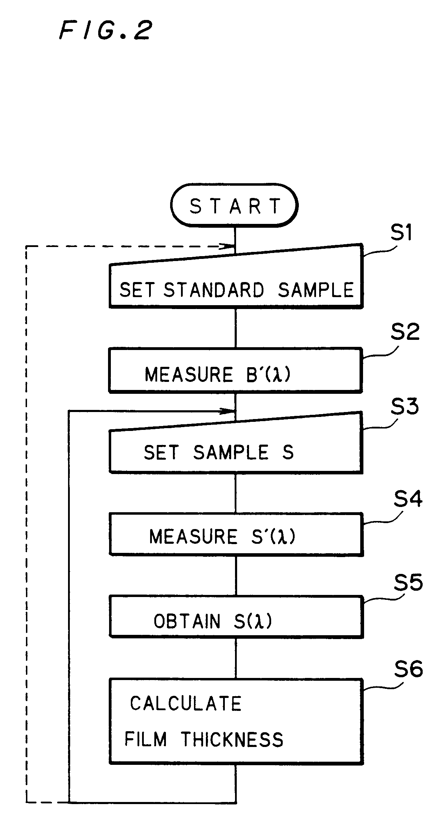

Fig. 2 is a flow chart showing a method of measuring film thickness by the film thickness measuring apparatus 2. In advance of measurement by the film thickness measuring apparatus 2, an operator previously inputs spectrum data B(λ) of a sample (hereinafter referred to as "standard sample"), whose spectrum data is family to, in the arithmetic unit 3 through a keyboard (not shown), to store the data in a memory (not shown) provided in the arithmetic unit 3. The standard sample may be prepared by a silicon substrate, a substrate which is deposited with aluminum on its surface, or the like.

Then the operator sets the standard sample on the sample holder of the microspectroscope 1 (step S1), and supplies a command outputted for detecting calibration data to the arithmetic unit 3. In response to a command from the arithmetic unit 3, the microspectroscpe 1 detects the spectrum of the standard sample, to store data B′(λ) relating to the spectrum in the memory of the arithmetic unit 3 (step S2).

Then, the operator takes out the standard sample from the sample holder of the microspectroscope 1 and sets the sample S on the sample holder of the microspectroscope 1 (step S3). Thereafter the operator supplies a command for starting measurement to the arithmetic unit 3, so that the microspectroscope 1 detects the spectrum of the sample S in response to a command outputted from the arithmetic unit 3, to store data S′(λ) relating to the spectrum thereof in the memory of the arithmetic unit 3 (step S4).

At a step S5, the data S′(λ), B(λ), and B′(λ) stored in the memory are read in the arithmetic unit 3, to obtain data S(λ) in accordance with the following expression: 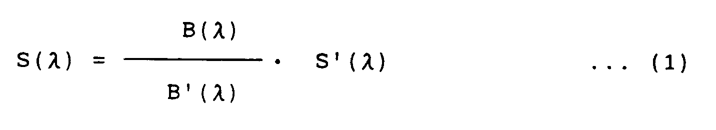
The data S(λ) corresponds to a signal outputted from the microspectroscope 1 on the assumption that absolutely no influence is caused by the aforementioned factors. In other words, the data S(λ) shows the true spectrum of the sample S.

On the basis of the data S(λ) obtained at the step S5, the arithmetic unit 3 operates the thickness of the thin film (step S6). The principle of operating film thickness is well known in the art, and hence description thereof is omitted.

As understood from the expression (1), the data S′(λ) relating to the actually measured spectrum is calibrated in the aforementioned manner to obtain the data S(λ) relating to the true spectrum, whereby the film thickness can be accurately measured.

Further, since the aforementioned factors are not influenced by peripheral environmental changes around the apparatus 2 such as those in temperature, humidity etc. but remain constant, the data B′(λ) once measured will not be strongly changed. Therefore, the steps S3 to S6 are repeated in order to measure the thickness of a subsequent sample S, to thereby continuously accurately measure the film thickness.

However, the spectrum is also influenced by factors other than the above, such as spectral emissivity which is changed following change in ambient temperature of the light source 11, for example. When the ambient temperature of the light source 11 is changed, spectral emissivity is also changed in response, to vary the spectrum acturally measured by the microspectroscope 1. It is assumed here that the light source 11 has a certain spectral emissivity characteristic (hereinafter referred to as "first characteristic") in measurement of the data B′(λ) at the step S2, for example. When the characteristic of the light source 11 in detection of the spectrum of the sample S is substantially identical to the first characteristic, the film thickness can be measured with no particular problem.

However, when a plurality of samples S are continuously subjected to measurement of film thickness and the light source 11 has a second characteristic which extremely differs from the first characteristic after a lapse of a certain period of time, accuracy in film thickness measurement is reduced. This is because the data S'(λ) is detected through illuminating light outgoing from the light source 11 having the second characteristic, although the data B'(λ) is detected through the illuminating light outgoing from the light source 11 having the first characteristic.

In order to continuously perform correct measurement of film thickness, therefore, it is necessary to frequently measure the data B'(λ) after measuring the film thickness of the sample S, as shown by dotted lines in Fig. 2. In this case, operation efficiency is reduced since the samples must be replaced on the sample holder of the microscpectroscope 1.

The present invention is directed to a microspectroscope which actually measures spectra B'(λ) of a standard sample whose spectrum B(λ) is known and spectra S'(λ) of an objective sample, to correct the spectrum S'(λ) on the basis of the spectrum B' (λ).

The spectrum B'(λ) of the observed light outgoing from the standard sample whose spectrum B(λ) is known, is detected. And the spectrum S'(λ) of the observed light outgoing from the objective sample is detected. Thereafter, the spectrum S'(λ) is corrected on the basis of the spectra B(λ) and B'(λ), to thereby prevent reduction in detecetion accuracy caused by variation in ambient temperature of the apparatus, humidity or the like.

These and other objects, features, aspects and advantages of the present invention will become more apparent from the following detailed description of the present invention when taken in conjunction with the accompanying drawings.
Fig. 1 is a schematic block diagram showing a conventional microspectroscope;
Fig. 2 is a flow chart showing a method of measuring film thickness by a film thickness measuring apparatus applied the microspectroscope shown in Fig. 1;
Fig. 3 is a schematic block diagram showing a microspectroscope according to a first example (not claimed).
Fig. 4 is a flow chart showing a method of measuring film thickness by a film thickness measuring apparatus applied the microspectroscope shown in Fig. 3;
Fig. 5 is a schematic block diagram showing a microspectroscope according to the present invention;
Fig. 6 is a flow chart showing operation of a film thickness measuring apparatus applied the microspectroscope shown in Fig. 5.

### A. First Example (not claimed)

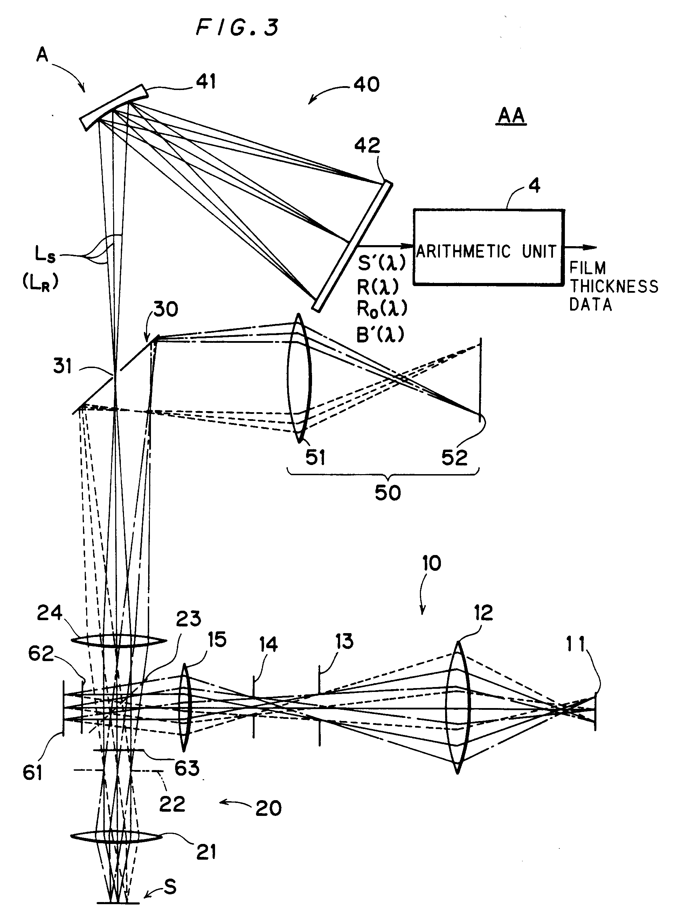

Fig. 3 is a schematic block diagram showing a microspectroscope A according to a first example (not claimed). As shown in Fig. 3, the microspectroscope A is formed by an illuminating optical system 10, a microscopic optical system 20, a reflecting mirror 30, a spectroscopic unit 40, a monitoring optical system 50, another reflecting mirror 61, and shutters 62 and 63. The illuminating optical system 10, the microscopic optical system 20, the reflecting mirror 30, the spectroscopic unit 40 and the monitoring optical system 50 are identical to those in the prior art shown in Fig. 1, and hence redundant description is omitted.

The reflecting mirror 61 is provided on an optical path of illuminating light outgoing from a light source 11 in a position symmetrical with a pupil position 22 with respect to a beam splitter 23. The position of the reflecting mirror 61 is not restricted to this but may be slightly moved on the optical path of the illuminating light, as a matter of course. The reflecting mirror 61 desirably has substantially uniform spectral reflectance within a wavelength range for spectral diffraction, and is prepared by a mirror deposited with aluminum etc., whose spectral reflectance is not extremely changed within the said range.

The shutter 62 is arranged between the reflecting mirror 61 and the beam splitter 23, while the other shutter 63 is arranged between the pupil position 22 of an objective lens 21 and the beam splitter 23. The shutters 62 and 63 are opened and closed by commands outputted from an arithmetic unit 4. The shutter 63 is not restricted to the position between the pupil position 22 and the beam splitter 23, but may be appropriately located between a sample S and the beam splitter 23.

The aforementioned microspectroscope A can be applied to a film thickness measuring apparatus, similarly to the prior art. Symbol AA in Fig. 3 denotes a film thickness measuring apparatus. As shown in Fig. 3, the film thickness measuring apparatus AA is formed by the microspectroscope A and the arithmetic unit 4, which operates film thickness in accordance with the following procedure while controlling the microspectroscope A:

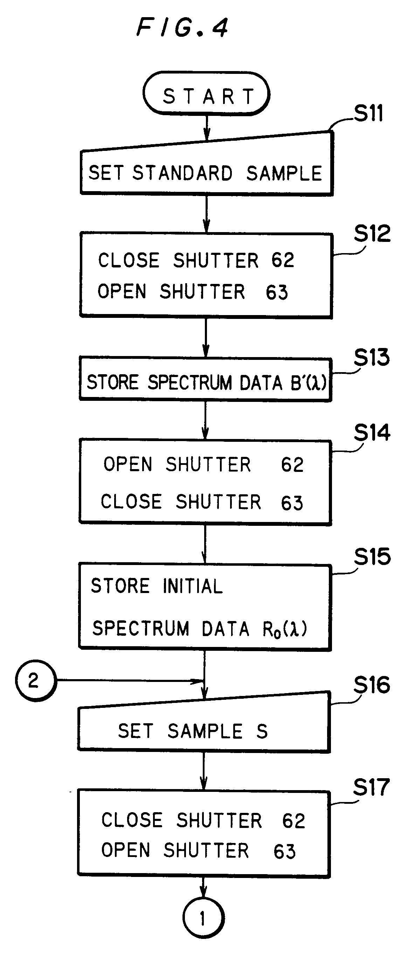

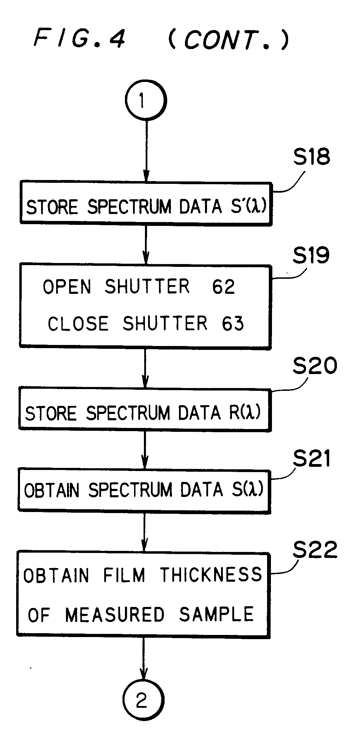

Fig. 4 is a flow chart showing a method of measuring film thickness by the film thickness measuring apparatus AA. In advance of measurement of film thickness by the film thickness measuring apparatus AA, an operator inputs data B(λ) relating to a known spectrum of a standard sample in the arithmetic unit 4 through a keyboard (not shown), to store the same in a memory (not shown) provided in the arithmetic unit 4. The operator further previously operates data (hereinaftre referred to as "reference data") relating to the spectrum with respect to thickness of a thin film on the basis of indexes of reflection of a substrate and the thin film of the sample S every constant thickness space and inputs the result of operation in the arithmetic unit 4 through the keyboard, to store the same in the memory of the arithmetic unit 4.

Then the operator sets the standard sample in a sample holder (step S11) and supplies a command for detecting calibration data to the arithmetic unit 4. In response to commands from the arithmetic unit 4, the shutters 62 and 63 are set in a closed state and an opened state respectively (step S12), so that illuminating light outgoing from the light source 11 is applied to the surface of the standard sample when the light source 11 is turned on. Observed light reflected by the surface of the standard sample is enlarged and imaged in a position close to the reflecting mirror 30 through the objective lens 21 and an image-formation lens 24. Within the observed light, observed light L_{S} passing through a pinhole 31 is taken in the spectroscopic unit 40, which in turn detects the spectrum of the observed light L_{S}. Further, data B′(λ) relating to the spectrum is supplied from a photo detector 42 to the arithmetic unit 4, and stored in the memory (step S13).

Immediately after the step S13, the shutters 62 and 63 are again set in an opened state and a closed state, respectively, in response to commands outputted from the arithmetic unit 4 (step S14). The light source 11 is turned on and illuminating light is applied to the reflecting mirror 61 through a condenser lens 12, an aperture stop 13, a field stop 14, another condenser lens 15, the beam splitter 23 and the shutter 62. Reflected light reflected by the reflecting mirror 61 is guided toward the image-formation lens 24 by the beam splitter 23, to be enlarged and image in a position close to the reflecting mirror 30 through the image-formation lens 24. Within the reflected light, reflected light L_{R} passing through the pinhole 31 is taken in the spectroscopic unit 40, and the photo detector 42 detects the spectrum of the reflected light L_{R}. Further, data R₀(λ) relating to the spectrum is supplied from the photo detector 42 to the arithmetic unit 4, to be stored in the memory (step S15). The data R₀(λ) shows spectral emissivity of the light source 11 in measurement of the spectral data B′(λ).

Thereafter the operator takes out the standard sample from the sample holder and sets the sample S in the sample holder (step S16). Then the operator supplies a command for starting measurement to the arithmetic unit 4, whereby the microspectroscope A is controlled in response to a command outputted from the arithmetic unit 4, to correctly obtain film thickness of the sample S as follows:

The shutters 62 and 63 are set in a closed state and an opened state, respectively (step S17) so that the spectrum of observed light L_{S} is detected similarly to the above, and data S′(λ) relating to the spectrum of the observed light L_{S} is stored in the memory provided in the arithmetic unit 4 (step S18).

Immediately after the step S18, the shutters 62 and 63 are again set in an opened state and a closed state, respectively (step S19), so that the spectrum of the reflected light L_{R} is detected similarly to the above and data R(λ) relating to the spectrum of the reflected light L_{R} is stored in the memory of the arithmetic unit 4 (step S20).

Thereafter the data B(λ), B′(λ), S′(λ), R(λ) and R₀(λ) stored in the memory are read, so that data S(λ) is obtained in accordance with the following expression (step S21): 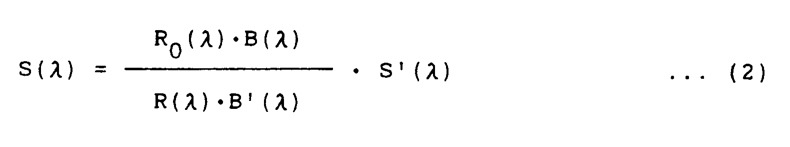
Even if the light source 11 has a second characteristic in measurement of the data S′(λ) (step S18) while the same has a first characteristic in measurement of the data B′(λ) (step S13), the data S(λ) relating to the spectrum of the sample S can be correctly detected since the amount of variation in spectral emissivity of the light source 11 is corrected on the basis of the data R₀(λ) and R(λ).

Thereafter the data S(λ) is compared with reference data stored in the memory, so that the film thickness of the sample S is obtained (step S22).

As understood from the expression (2), the data S′(λ) relating to the actually measured spectrum is calibrated in the aforementioned manner to obtain the film thickness on the basis of the calibrated data S(λ) whereby accuracy in measurement of the film thickness can be improved.

After the operator replaces the sample S, the aforementioned steps S17 to S22 are so repeated as to continuously execute the measurement of film thickness of the sample S.

As hereinabove described, errors caused by variation in spectral emissivity of the light source 11 can be calibrated by only switching closed and opened states of the shutters 62 and 63, to thereby improve operation efficiency.

Although the data R(λ) is detected immediately after detection of the data S'(λ), the same may be detected immediately before detection of the data S'(λ).

Further, the method of obtaining film thickness on the basis of the data S(λ) is not restricted to the above but a well-known method such as that disclosed in Japanese Patent JP-A-61 217 705 is also applicable.

### B. First Embodiment of the invention

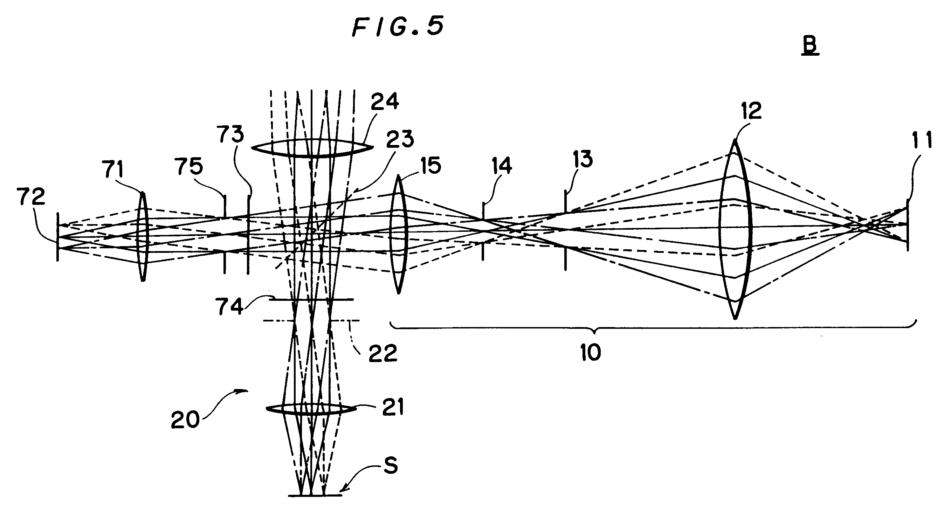

Fig. 5 is a block diagram showing an essential part of a microspectroscope according to a the present invention. An illuminating optical system 10, a microscopic optical system 20, an objective lens 71, a standard sample 72 and shutters 73 and 74, which are components of a microspectroscope B, are shown in Fig. 5. Other components (reflecting mirror 30, spectroscopic unit 40 and monitoring optical system 50) are identical to those of the first example, and not shown in the figure. Numeral 75 denotes a pupil position of the objective lens 71.

The objective lens 71, which is substantially identical in spectral transmittance and aperture number to an objective lens 21, is located symmetrically to the objective lens 21 of the microscopic optical system 20 with respect to a beam splitter 23. The standard sample 72 is provided in a front focal position of the objective lens 71. The shutters 73 and 74 are arranged between the beam splitter 23 and the pupil positions 75 and 22, respectively.

Since the embodiment is substantially identical in structure to the first example as understood from comparison of Figs. 3 and 5, the microspectroscope B can be applied to a film thickness measuring apparatus. Such a film thickness measuring apparatus is identical in structure to the film thickness measuring apparatus AA shown in Fig. 3 except for that the objective lens 71 is provided, and its operation is also identical to that of the apparatus AA (Fig. 4). According to the embodiment, therefore, an effect identical to that of the first example can be attained.

On the other hand, optical condition between the standard sample 72 and the beam splitter 23 is substantially identical to that between a sample S and the beam splitter 23. Hence, the following effect can be attained:

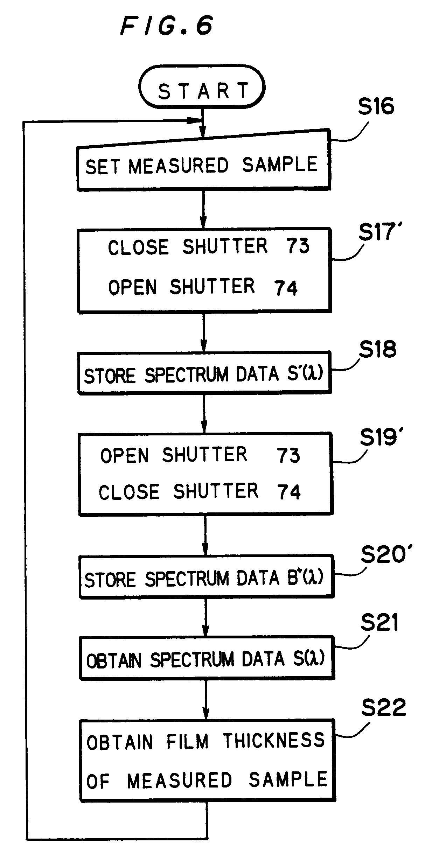

Fig. 6 is a flow chart showing the operation of a film thickness apparatus, in which the standard sample is designed by reference sign 72. Similarly to the first example , the operator stores data B(λ) relating to the spectrum of the standard sample and previously operated reference data in the memory, respectively, in advance of film thickness measurement.

Then the operator sets the sample S in a sample holder (step S16) and thereafter supplies a command for starting measurement to an arithmetic unit 4 so that the entire apparatus is controlled in response to a command outputted from the arithmetic unit 4, to thereby correctly obtain the film thickness of the sample S in the following manner:
The shutters 73 and 74 are set in a closed state and an opened state, respectively (step S17'), so that the spectrum of observed light is detected similarly to the above and data S'(λ) relating to the spectrum of the light reflected from the objective sample is stored in the memory (step S18).

Immediately after the step S18, the shutters 73 and 74 are set in an opened state and a closed state, respectively (step S19'), and the spectrum of reflected light reflected by the standard sample 72 is detected similarly to the above, so that data B'(λ) relating to the spectrum of the light reflected from the standard sample is stored in the memory (step S20').

Thereafter the data B(λ), B'(λ) and S'(λ) stored in the memory are read to obtain data S(λ) in accordance with the following expression (step S21): 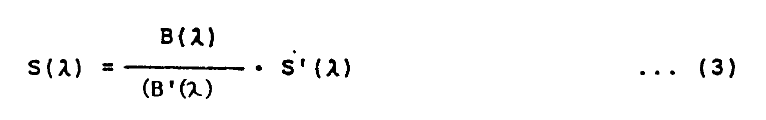
There is no need to consider an error caused by variation in spectral emissivity of a light source 11, since the data B'(λ) is detected immediately after detection of the data S'(λ).

Thereafter the data S(λ) is compared with the reference data stored in the memory, to obtain the film thickness of the sample S (step S22).

Film thickness can be continuously measured by repeating the steps S16 to S22 in particular.

As understood from comparison of Figs. 4 and 6, the measurement procedure is extremely simplified when the standard sample 72 is used to improve operation efficiency.

The present invention is not restricted to the aforementioned embodiments, but the embodiments may be replaced by the illuminating optical system 10 of the first example and another structure formed by a microscopic optical system 20, a reflecting mirror 30, a spectroscopic unit 40 and a monitoring optical system 50 for example.

Further, although the diffraction grating 41 is employed as spectroscopic means of the spectroscopic unit 40 or 40' in each of the embodiments, an optical element having a spectroscopic function, such as a prism, can be alternatively employed.

In addition, although the microspectroscope is applied to a film thickness measuring apparatus in each of the aforementioned embodiments, the present invention is not restricted to such a film thickness measuring apparatus.

Although, the present invention has been described and illustrated in detail, it is clearly understood that the same is by way of illustration and example only and is not to be taken by way of limitation, the scope of the present invention being limited only by the terms of the appended claim.

## Claims

1. Microspectroscope for measuring the spectrum B' (λ) of a standard sample having a known spectrum B (λ) and the spectrum S' (λ) of an objective sample (S) to be measured and correcting the spectrum S' (λ) on the basis of the spectrum B' (λ), which microspectroscope comprises:
(a) a sample holder for holding the standard sample and the objective sample (S);
(b) a light source (11) for projecting illuminating light towards the sample holder;
(c) a beam splitter (23);
(d) a microscopic optical system (20) for imaging observed light (Ls) from the standard sample or the objective sample (S) held by the sample holder in a prescribed image-formation position;
(e) first spectroscopic means (41) for receiving the observed light (Ls) from the microscopic optical system (20) and separating the observed light (Ls) into spectral components;
(f) and first detector means (42) for detecting the spectrum of the observed light (Ls);
characterised in that the microscopic optical system (20) further comprises
(g) a first objective lens (21) provided between the beam splitter (23) and the objective sample (S),
(h) optical means comprising a second objective lens (71) having substantially the same optical characteristics as those of the first objective lens (21) of the microscopic optical system (20), and shutter means (73, 74),
(i) this second objective lens (71) being disposed between the standard sample (72) and the beam splitter (23),
(j) these shutter means (73, 74) having a closed and an opened state, respectively, so that either light reflected from the objective sample (S) is detected to obtain data S'(λ) or light reflected from the standard sample (72) is detected to obtain data B'(λ),
(k) whereby the correction is carried out in accordance with the relation

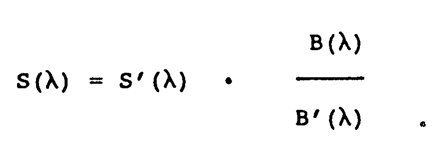

## Patentansprüche

1. Mikroskop-Spektralgerät zum Messen des Spektrums B'(λ) einer Standardprobe, die ein bekanntes Spektrum B (λ) besitzt, und des Spektrums S'(λ) einer Objektivprobe (S), die gemessen werden soll und Korrigieren des Spektrums S'(λ) auf der Basis des Spektrums B'(λ), wobei das Mikroskop-Spektralgerät umfaßt:
(a) einen Probenhalter zum Halten einer Standardprobe und der Objektivprobe (S);
(b) einer Lichtquelle (11) zum Projizieren von Beleuchtungslicht auf den Probenhalter;
(c) einem Strahlteiler (23);
(d) einem mikroskopisch-optischem System (20) zum Abbilden beobachteten Lichts (L_{S}) von der Standardprobe oder der Objektivprobe (S), die durch den Probenhalter in einer vorgegebenen bilderzeugenden Position gehalten ist;
(e) ersten spektroskopischen Mitteln (41) zum Auffangen des erfaßten Lichts (L_{S}) aus dem mikroskopischoptischem System (20) und zum Auftrennen des Lichts (L_{S}) in Spektralkomponenten;
(f) und ersten Detektormitteln (42) zum Erfassen des Spektrums des beobachteten Lichts (L_{S});
dadurch gekennzeichnet, daß das mikroskopisch-optische System (20) weiter umfaßt:
(g) eine erste Objektivlinse (21), die zwischen einem Strahlteiler (23) und der Objektivprobe (S) angeordnet ist,
(h) optische Mittel, die eine zweite Objektivlinse (71), die im wesentlichen die gleichen optischen Charakteristika wie die der ersten Objektivlinse (21) des mikroskopisch-optischen Systems (20) besitzt, und Blendenmitteln (73, 74) umfassen,
(i) wobei diese zweite Objektivlinse (71) zwischen der Standardprobe (72) und dem Strahlteiler (23) angeordnet ist,
(j) wobei diese Blendenmittel (73, 74) jeweils einen geschlossenen und einen geöffneten Zustand besitzen, so daß entweder Licht reflektiert von der Objektivprobe (S) erfaßt wird, um Daten S'(λ) zu erhalten oder Licht reflektiert von der Standardprobe (72) erfaßt wird, um Daten B'(λ) zu erhalten,
(k) wodurch die Korrektur nach der Relation: 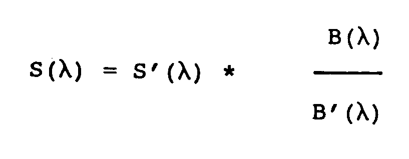 durchgeführt wird.

## Revendications

1. Microspectroscope pour la mesure du spectre B'(λ) d'un échantillon standard possédant un spectre connu B(λ) et du spectre S'(λ) d'un échantillon objet (S) à mesurer et pour la correction du spectre S'(λ) sur la base du spectre B'(λ), microspectroscope comprenant :
- un support d'échantillon pour le support de l'échantillon standard et de l'échantillon objet (S);
- une source de lumière (11) pour projeter une lumière vers le support d'échantillon;
- un diviseur de faisceau (23);
- un système optique de microscope (20) pour l'imagerie de la lumière observée (Ls) à partir de l'échantillon standard ou de l'échantillon objet (S) maintenu par le support d'échantillon dans une position prescrite de formation d'image;
- un premier moyen spectroscopique (41) pour recevoir la lumière observée (Ls) du système optique de microscope (20) et pour séparer la lumière observée (Ls) en composantes spectrales; et
- un premier moyen de détecteur (42) pour détecter le spectre de la lumière observée (Ls);
microspectroscope caractérisé en ce que le système optique de microscope (20) comprend de plus :
- une première lentille d'objectif (21) prévue entre le diviseur de faisceau (23) et l'échantillon objet (S);
- un moyen optique comprenant une seconde lentille d'objectif (71) possédant pratiquement les mêmes caractéristiques optiques que celles de la première lentille d'objectif (21) du système optique de microscope (20) et des moyens d'obturateur (73, 74);
cette seconde lentille d'objectif (71) étant placée entre l'échantillon standard (72) et le diviseur de faisceau (23);
ces moyens d'obturateur (73, 74) possédant des états respectifs fermé et ouvert de telle façon que soit la lumière réfléchie par l'échantillon objet (S) est détectée pour obtenir les données S'(λ), soit la lumière réfléchie par l'échantillon standard (72) est détectée pour obtenir les données B'(λ);
la correction étant ainsi effectuée selon la relation:
$\text{S(λ) = S'(λ). B(λ)/B'(λ).}$
